# DEMANDE DE BREVET EUROPEEN

(11) **EP 0 874 169 A1**
(43) Date de publication de la demande: **28.10.1998**
(21) Numéro de dépôt: 98400692.4
(22) Date de dépôt: 25.03.1998
(51) Int. Cl.: F16C 1/22, F16D 13/75

(54) **Dispositif de rattrapage automatique de jeu d'une commande par câble, application à la commande de l'embrayage ou de frein d'un véhicule**

(30) Priorité: 27.03.1997 FR 9703767
(71) Demandeur: Adwest Bowden France S.A., 60730 Cauvigny (FR)
(72) Inventeur: Vicogne, Sylvain, 60370 Berthecourt (FR)
(74) Mandataire: Schrimpf, Robert

(57) **Abrégé**

L'invention concerne un dispositif de rattrapage automatique de jeu pour un système de commande à câble.

Ce dispositif est du type dans lequel la longueur du câble (1) est augmentée fonctionnellement de la longueur de la portion d'une tige filetée (5) comprise entre une extrémité de la tige qui est fixée à une extrémité du câble et un écrou (8) en prise sur la tige filetée et monté dans un boîtier (6) entre deux cages à bille (9, 10) de façon à pouvoir tourner sur lui-même et à se déplacer axialement jusqu'à venir en appui contre une butée de friction (11) qui l'empêche de tourner, la tige filetée étant en permanence sollicitée par un ressort (12) qui la tire dans le sens qui tend à éloigner l'écrou (8) de la butée de friction (11) et la position axiale du boîtier dépendant de l'action de l'organe de commande, et il est caractérisé en ce que le dispositif comprend dans le boîtier (6), de part et d'autre de l'écrou (8), des moyens de pression (13, 14) qui maintiennent en permanence les cages à billes (9, 10) plaquées contre l'écrou (8).

L'invention s'applique notamment à la commande d'un embrayage ou d'un frein de véhicule.

## Description

L'invention concerne une commande à câble du type dans lequel un câble interposé sur un parcours défini entre un organe de commande et un organe commandé peut coulisser dans un sens sous l'action de l'organe de commande afin d'actionner l'organe commandé.

Dans un exemple typique, l'organe de commande est une pédale et l'organe commandé est un embrayage ou un frein de véhicule.

Pour que cette commande se fasse sans jeu, il est indispensable que le câble soit tendu. Cette tension est obtenue au montage par un réglage approprié de la longueur du cable mais un jeu peut se créer avec le temps, notamment en raison d'une modification de la longueur du câble sous l'effet des sollicitations répétées auxquelles il est soumis.

Différentes solutions ont été proposées pour rattraper automatiquement ce jeu.

Dans l'une de ces solutions, la longueur du câble est augmentée fonctionnellement de la longueur de la portion d'une tige filetée comprise entre une extrémité de la tige qui est fixée à une extrémité du câble et un écrou en prise sur la tige filetée et monté dans un boîtier entre deux cages à billes de façon à pouvoir tourner sur lui-même et à se déplacer axialement jusqu'à venir en appui contre une butée de friction qui l'empêche de tourner, la tige filetée étant en permanence sollicitée par un ressort qui la tire dans le sens qui tend à éloigner l'écrou de la butée de friction, et la position axiale du boîtier dépendant de l'action de l'organe de commande.

Une telle solution est décrite par exemple dans la demande de brevet japonais publiée sous le n° 62-292913 le 19 décembre 1987.

La présente invention concerne un tel système et a pour but de supprimer la bruyance due aux billes lors du déplacement des cages à billes lorsque l'écrou se déplace axialement.

On y parvient, selon l'invention, en montant dans le boîtier, de part et d'autre de l'écrou, des moyens de pression qui maintiennent en permanence les cages à billes plaquées contre l'écrou.

Dans une réalisation préférée, ces moyens sont conçus pour exercer des pressions différentes sur l'écrou afin de privilégier la position verrouillée, c'est à dire qui correspond à l'immobilisation de l'écrou par frottement contre la butée du boîtier.

On décrira ci-après un exemple d'une réalisation conforme à l'invention en référence aux figures du dessin joint.
La figure 1 est une vue de principe d'une commande à cable équipée d'un système de rattrapage de jeu perfectionné selon l'invention;
la figure 2 est une coupe longitudinale du système de rattrapage du jeu selon l'invention, en position verrouillée, et
la figure 3 est une coupe longitudinale du système de rattrapage du jeu du câble selon l'invention, en position déverrouillée.

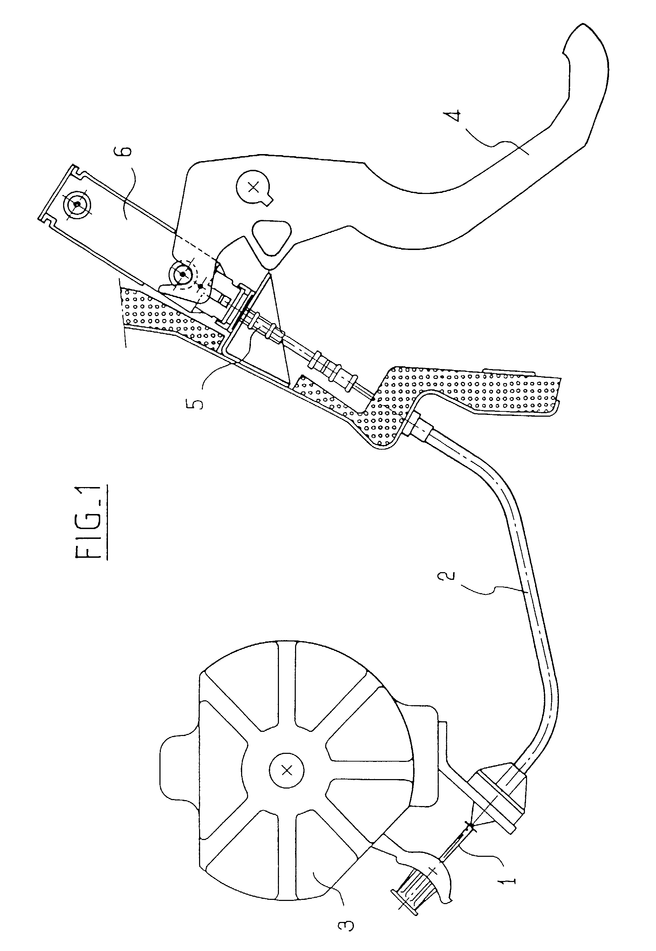

Dans l'exemple d'application représenté sur la figure 1, le câble 1 qui passe dans une gaine (câble BOWDEN) transmet à un embrayage 3 l'action d'une pédale de commande 4 (fig. 1).

Une tige filetée 5 est fixée à une extrémité du câble et traverse un boîtier 6 qui est déplaçable axialement sur la tige dans le sens de la flèche A sous l'action de la pédale 4.

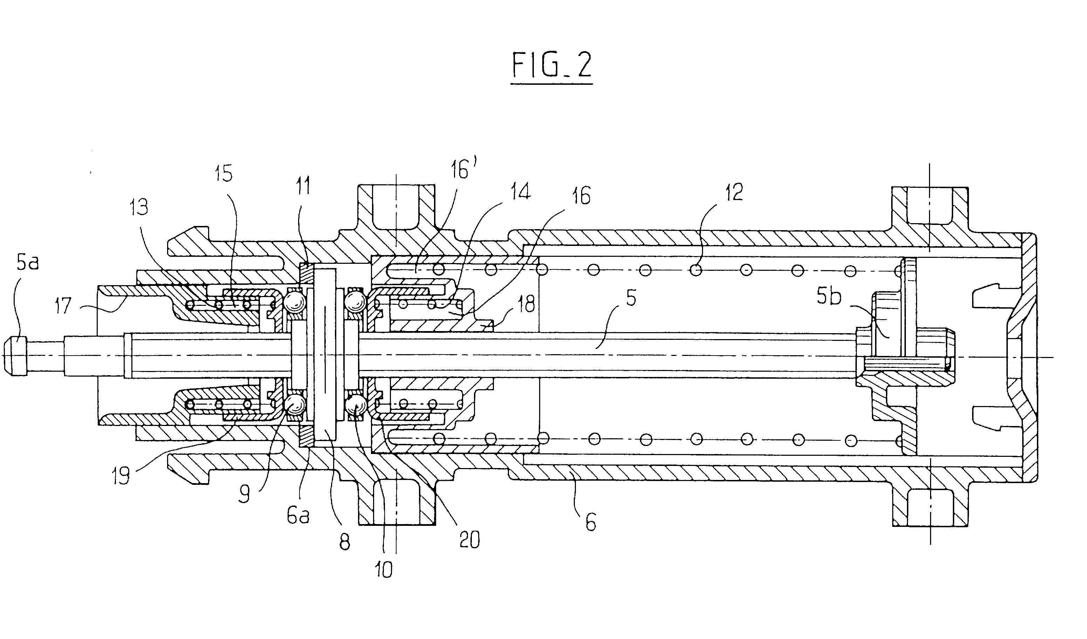

Dans le boîtier 6 (fig. 2) est monté un écrou 8 en prise sur la tige 5, entre deux cages à billes 9, 10, cet écrou étant déplaçable axialement et pouvant tourner sur lui-même tant que son déplacement ne l'a pas appliqué au contact d'une butée 11 qui, par frottement, l'empêche de tourner.

Une extrémité 5a de la tige est apte à être raccordée à l'extrémité du câble 1 tandis que l'autre extrémité 5b de la tige est sollicitée par un ressort cylindrique 12 dans le sens qui conduit à tendre le cable 1.

Le principe de ces dispositions est bien connu en soi, par exemple d'après la publication précitée.

Selon l'invention, des ressorts de compression cylindriques 13 et 14, de forces différentes, sont disposés dans le boîtier pour pousser respectivement l'une et l'autre des cages 9, 10 contre l'écrou 8.

Selon une caractéristique avantageuse de cette réalisation, les moyens de placage élastiques 13, 14 sont logés dans des logements 15, 16 de deux manchons respectifs 17, 18 qui sont enfilés sur la tige 5 et fixés dans le boîtier, et deux bagues 19, 20 à section en cuvette sont interposées devant les logements 15, 16 pour transmettre aux cages à billes les pressions des moyens élastiques.

Ces pressions sont réglées différentes soit par le choix de ressorts différents, soit par des précompressions différentes imposées à deux ressorts identiques.

Selon l'invention, au lieu de porter directement contre un épaulement 6a du boîtier 6 lorsqu'il est en position verrouillée, l'écrou porte contre une rondelle en élastomère 11 plaquée contre cet épaulement 6a, ce qui contribue encore à diminuer la bruyance du système.

Avantageusement, le manchon 18 qui comporte un logement 16 pour celui des ressorts dont la force d'action est dirigée vers le câble comporte un logement 16' tourné en sens inverse pour loger l'extrémité du ressort 12 qui agit sur la tige 5 dans le sens de la traction du câble par la tige.

Avantageusement chacun des manchons est conçu pour guider à coulisse la bague correspondante.

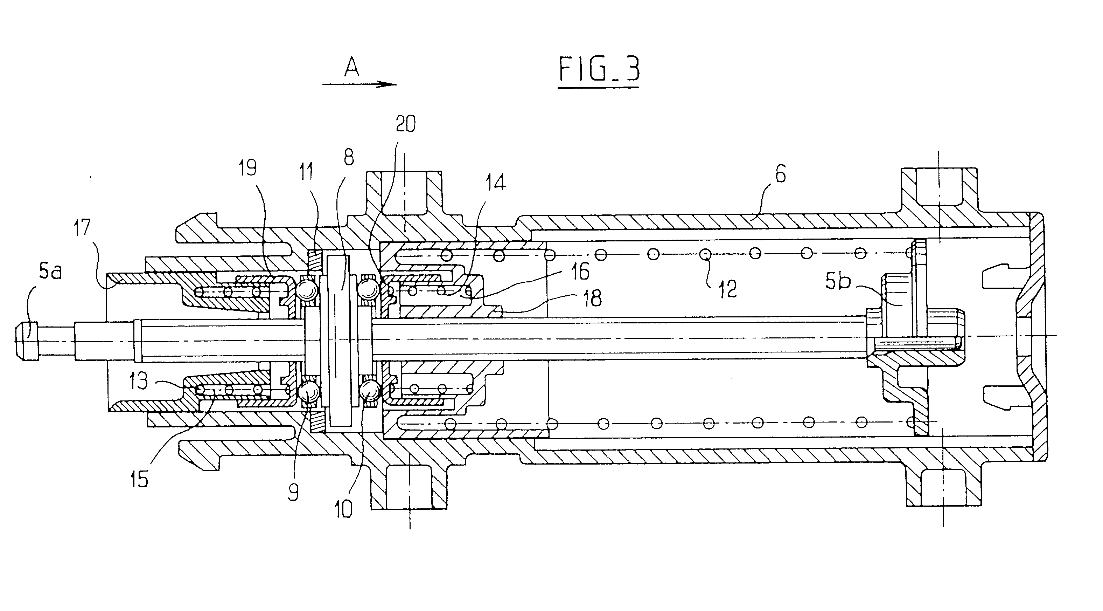

Dans la position déverrouillée représentée sur la figure 3, l'écrou 8 est libre et la tension du câble est déterminée pendant cette période par le ressort 12 qui pousse la tige dans le sens de la flèche A, provoquant la rotation de l'écrou (dans le boîtier immobile), ce qui raccourcit la longueur de la tige entre l'écrou et l'extrémité du cable en tant que de besoin pour restaurer la tension du câble.

Pendant ce déplacement de l'écrou, les cages à billes restent plaquées contre l'écrou par les ressorts 13 et 14.

En actionnant la pédale 4, le conducteur provoque un déplacement du boîtier 6 dans le sens de la flèche A jusqu'à mettre la rondelle 11 en butée contre l'écrou, empêchant une rotation ultérieure de l'écrou : l'écrou reste donc fixe sur la tige pendant l'actionnement de la pédale.

L'invention s'applique à toutes les commandes à câbles du type défini plus haut et notamment aux commandes utilisées pour commander l'embrayage ou le frein d'un véhicule.

## Revendications

1. Dispositif de rattrapage automatique de jeu, pour un système de commande à câble du type dans lequel un câble (1) interposé sur un parcours défini entre un organe de commande (4) et un organe commandé (3) peut coulisser dans un sens sous l'action de l'organe de commande afin d'actionner l'organe commandé, ce dispositif étant du type dans lequel la longueur du câble (1) est augmentée fonctionnellement de la longueur de la portion d'une tige filetée (5) comprise entre une extrémité de la tige qui est fixée à une extrémité du câble et un écrou (8) en prise sur la tige filetée et monté dans un boîtier (6) entre deux cages à bille (9, 10) de façon à pouvoir tourner sur lui-même et à se déplacer axialement jusqu'à venir en appui contre une butée de friction (11) qui l'empêche de tourner, la tige filetée étant en permanence sollicitée par un ressort (12) qui la tire dans le sens qui tend à éloigner l'écrou (8) de la butée de friction (11) et la position axiale du boîtier dépendant de l'action de l'organe de commande, caractérisé en ce que le dispositif comprend dans le boîtier (6), de part et d'autre de l'écrou (8), des moyens de pression (13, 14) qui maintiennent en permanence les cages à billes (9, 10) plaquées contre l'écrou (8).

2. Dispositif selon la revendication 1, dans lequel lesdits moyens de pression (13, 14) sont conçus pour exercer des pressions de placage différentes sur l'écrou afin de privilégier la position verrouillée, c'est à dire qui correspond à l'immobilisation de l'écrou par frottement contre la butée du boîtier.

3. Dispositif selon la revendication 1 ou 2, dans lequel lesdits moyens de pression comprennent des ressorts de compression (13, 14).

4. Dispositif selon la revendication 3, dans lequel lesdits ressorts sont logés dans des logements (15, 16) de deux manchons respectifs (17, 18) en face de deux bagues qui transmettent les pressions à l'écrou.

5. Dispositif selon la revendication 4, dans lequel chacun des manchons est conçu pour guider à coulisse la bague correspondante.

6. Dispositif selon la revendication 4 ou 5, dans lequel le manchon (18) qui comporte un logement (16) pour celui des ressorts dont la force d'action est dirigée vers le câble comporte un logement (16') tourné en sens inverse pour loger l'extrémité d'un ressort (12) qui agit sur la tige (5) dans le sens de la traction du câble par la tige.

7. Dispositif selon l'une des revendications 1 à 6, dans lequel ladite butée de frottement est une rondelle en élastomère (11) montée contre un épaulement (6a) du boîtier.

8. Commande à câble du type dans lequel un câble (1) interposé sur un parcours défini entre un organe de commande (4) et un organe commandé (3) peut coulisser dans un sens sous l'action de l'organe de commande afin d'actionner l'organe commandé, caractérisée en ce qu'elle comporte un dispositif automatique de rattrapage de jeu selon l'une des revendications 1 à 7.

9. Application d'une commande à câble selon la revendication 8, à la commande de l'embrayage ou du frein d'un véhicule.
